Europäisches Patentamt

European Patent Office

Office européen des brevets

(11) Publication number: **0 148 615**
**B1**

(12) **EUROPEAN PATENT SPECIFICATION**

(45) Date of publication of patent specification: **15.02.89**

(21) Application number: **84308821.2**

(22) Date of filing: **17.12.84**

(51) Int. Cl.⁴: **C 09 D 11/16, B 41 M 1/30**

(54) Inks for transparency films.

(30) Priority: **10.01.84 US 569674**

(43) Date of publication of application:
**17.07.85 Bulletin 85/29**

(45) Publication of the grant of the patent:
**15.02.89 Bulletin 89/07**

(84) Designated Contracting States:
**CH DE FR GB IT LI**

(56) References cited:
**GB-A-1 175 108**
**US-A-2 375 230**
**US-A-4 379 804**

(73) Proprietor: **MINNESOTA MINING AND
MANUFACTURING COMPANY
3M Center, P.O. Box 33427
St. Paul, Minnesota 55133-3427 (US)**

(72) Inventor: **Strebel, Elwood L.
c/o Minnesota Mining & Manufacturing
Company
P.O.Box 33427, St.Paul, MN 55133-3427 (US)**

(74) Representative: **Baillie, Iain Cameron et al
c/o Ladas & Parry Isartorplatz 5
D-8000 München 2 (DE)**

EP 0 148 615 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# EP 0 148 615 B1

**Description**

Background of the disclosure

This invention relates to inks for graphic plotting devices, and, more particularly to inks useful for plotting images on transparent, polymeric substrates having ink-receptive surfaces.

Polymeric sheet materials, particularly transparent sheet materials, are commonly used to prepare imaged sheets for projection onto a surface for viewing. One technique for preparing such "visual transparencies" involves depositing ink on the surface of the sheet to provide the desired images. Recently, computer-driven graphic plotting devices have become available which can quickly and precisely generate complex, graphic information. These plotters conventionally utilize pens containing solvent based inks which can remain exposed to the air for long periods of time without drying out by employing solvents of low volatility to retard drying of the pen tips.

While the graphic plotting devices can generate particularly attractive and effective materials for visual presentation, the nature of the inks required to maintain reasonably long pen life, e.g. low volatility, poses problems in the preparation and handling of the graphic materials. For example, many substrates do not readily accept these inks and the ink beads up on the surface of the film. Other substrates that accept the inks to a greater degree still require an extended period of time, e.g. 3 minutes or more, before the surface is dry enough for handling. This greatly increases the opportunity for the image to be smeared during removal of the substrate from the plotter or during handling and stacking of the imaged sheets. Other inking problems are evidenced by irregular image density, including dots at the end of a pen stroke, and severe striations resulting from the multiple, adjacent pen strokes required to "paint" a large block of color, such as when generating a bar chart or other images comprising blocks of color.

Although many solvent-based inks can remain exposed to air for long periods of time without drying out, the trade-off between long open-cap life and ink drying time is generally not satisfactory for typical business purposes. All too often, operator neglect results in the cap not being returned to the pen for periods of time exceeding 1—2 hours, such as for example, when the operator leaves forgetting to cap the pin. Inks which exhibit long open-cap life often do not dry rapidly enough on the transparent, polymeric substrates and exhibit other inking problems. Generally, it is preferred that the inks dry within 2 minutes after application without exhibiting end dotting, striations, etc.

US 2,375,230 discloses inks which may be used in type wheel printers, fountain pens and automatic syphon recording devices. The inks contain methyl violet and airline dyes dissolved in mixed glycol and glycol ether solvents, each having a boiling point of a least 176°C (350°F), and the inks have surface tensions of between $25 \times 10^{-5}$N/cm and $30 \times 10^{-5}$N/cm. This specification discloses a range of 10% to 33.5% by weight for the concentration of airline dye. The inks are stated to be useful for printing on transparent tape or sheets of cellulose and cellulose esters.

Eisele et al, U.S. Patent No. 4,379,804, entitled Liquid Sorbent Materials, issued April 12, 1983, discloses composite, liquid-sorbent media which can be applied to various substrates to provide improved liquid-sorbent materials. The composite media comprise a liquid-sorbent underlayer and, overlying said underlayer, a liquid-permeable surface layer, the liquid sorptivity of said underlayer being greater than the liquid sorptivity of said surface layer. Transparent sheets having the liquid-sorbent composite media coated on the surface are a preferred embodiment of that invention. Although the liquid-sorbent media provides excellent drying time for many solvent-based ink compositions, up to now, no ink composition has been available that is suitable for such media and can provide both rapid drying time and long open-cap life.

Summary of the invention

The present invention aims to overcome many of the deficiencies of the prior art inking systems by providing inks which exhibit relatively long open-cap life and relatively short drying times on liquid-sorbent, transparent substrates of the type described in U.S. Patent 4,379,804, while providing superior appearance imaging properties.

The invention provides an ink composition that is capable of use in marking pens and that is compatible with transparent, ink-receptive, liquid-sorbent media which comprise a liquid-sorbent underlayer and, overlying said underlayer, a liquid-permeable surface layer, the liquid sorptivity of said underlayer being greater than the liquid sorptivity of said surface layer, said ink comprising:

(a) from 15 to 25% by weight, based on the total ink composition, of one or more non-ionic, water insoluble dyes that adhere well to the surface of said media, said dye or dyes being capable of providing an optical density on said media which decreases by no more than 10% after 6 hours exposure to heat and light on the stage of an overhead projector.

(b) up to 85% by weight, based on the total ink composition, of a vehicle having a boiling temperature, at atmospheric pressure, of at least 150°C, said vehicle comprising at least one solvent for said dyes or dyes,

said ink composition having a surface tension of between 20 and $35 \times 10^{-5}$N/cm and a viscosity of between 5 and 20 mPas, whereby said ink composition has a drying time on said liquid-sorbent media of less than two minutes and an open-cap life of at least one hour.

The invention also provides an information recording kit for making transparencies for projection of

2

information comprising a recording material, said ink composition, and means for applying the ink composition on the recording material, wherein said recording material comprises a transparent substrate having applied thereto a composite media comprising a liquid-sorbent underlayer, and, overlying said underlayer, a liquid permeable surface layer wherein the liquid sorptivity of the underlayer is greater than the liquid sorptivity of the surface layer.

Because the dyes in the inks of the present invention are nonionic, they are compatible with the high-boiling solvents of the vehicle, and being water insoluble they are not subject to removal by washing or by physical abuse under high humidity conditions.

In certain instances the dye and vehicle alone will not provide adequate inking properties with respect to rate of flow through the pen nib or behavior on the liquid-sorbent media. The present inventor has found that the addition of resin levelling agents and wetting agents can be used to adjust the various performance parameters so that the ink will exhibit desirable imaging qualities without significantly impairing the open-cap life provided by the high boiling solvents used in the vehicle.

The ability to retain long open-cap life while achieving a very short drying time, seemingly contradictory objectives, is a function of both the use of the liquid-sorbent media of U.S. 4,379,804 and appropriate balancing of the ink vehicle properties.

Because the inks of the present invention are specifically designed to provide optimum imaging properties on transparent, polymeric films, static buildup can be a problem in low humidity environments where such insulating films are employed. Static buildup on a droplet which is generated at the end of a line or where the pen pauses can cause the droplet to spatter on the media. To minimize this effect, it has been found useful to incorporate formamide in some of the ink formulations. This has the effect of raising the surface tension of the liquid and the droplets are more resistive to breakup due to static forces. The amount of formamide added varies with the type of dye used, perhaps because of the conductive nature of the dye of dye impurities. It has been found that a higher level of formamide should be used with the black dye Flexo Black X-11. Less formamide is needed with the red, green and blue dyes used. Generally, up to about 20% by weight formamide, based on the total weight of the ink composition, can be used.

In certain compositions, formamide acts to enhance optical density. For example, formamide provides enhanced optical density to green inks and prevents feathering with the blue and black inks. The role played by formamide in enhancing these inks is not clearly understood.

## Detailed description

As used in the present application, "open-cap life" refers to the period of time the ink pen can remain exposed to the atmosphere without clogging the pen. "Drying time" refers to the time it takes for the ink to dry to the point of being able to be touched and handled once applied to the imaging media. Tests for these properties are explained in greater detail hereinafter. Clearly the "drying" phenomenon on the liquid-sorbent imaging media used in this invention is a function of the volatility of the ink vehicle as well as the ability of the ink vehicle to penetrate and be absorbed in the liquid-sorbent media. The preferred solvents as well as the "tailoring agents" added to the solvents, e.g., resin levelling agent and wetting agent, manifest their presence not only by improving flow from the pen nib onto the imaging media, but also by the appearance of the ink on the film, which in turn is a function of the wetting, penetration, diffusion, and sorption of the ink when applied to the film.

Specific parameters such as open-cap life, drying time, viscosity, surface tension, ink climb rate, optical density, permanence, solubility, and the like can be used to characterize the inks useful in the present invention and tests for these parameters as well as suitable ranges are discussed in greater detail hereinafter.

The dyes useful in formulating the inks of the present invention are selected with regard to color, solubility in the vehicles of choice, tinctorial power, permanence on exposure to ambient conditions including heat, light and physical abrasion, compatibility with the vehicle and imaging media, and the like. Dyes suitable for use in the practice of the present invention should exhibit a high degree of solubility in solvents having a high boiling point, e.g., the higher homologues of monoglycol and diglycol ethers. Dyes having good solubility, e.g., 15 to 25% by weight in the ink vehicle, provide the purest, clearest, most uniform colors.

The dyes are preferably of high purity. Many dyes contain up to 75% by weight impurities such as sodium sulfate. These impurities tend to cause rapid precipitation of the dye on drying due to concentration effects. The excessively rapid precipitation causes agglomeration of the dye particles which is manifested in "blotchy", non-uniform color. When high purity dyes are not available, the addition of resin levelling agents and wetting agents, as discussed hereinafter, can to a large degree compensate for the presence of impurities.

Representative examples of dyes particularly useful in the present invention are the basic triarylmethane dyes, azo dyes, metallized azo dyes, and phthalocyanine dyes. Commercially available dyes suitable for use in the present invention include Acetosol Fire Red RGLS, Acetosol Blue GLS, Acetosol Green GLS, BASF Flexo Black X-11, Acetosol Brown, Acetosol Yellow and Acetosol Pink 6 BLS. One or more dyes can be employed to formulate the dye component.

The solvents suitable for formulating the ink vehicles of the present invention must be capable of dissolving the dyes and other ingredients in the ink composition.

In addition to drying rapidly, it is imperative that the ink vehicle be compatible with the liquid-sorbent medium so that it will not significantly disrupt the integrity of the surface layer of the medium. While the surface layer of the media can be selected to be most resistant to such disruption (see the teaching of U.S. 4,379,804, e.g. Column 4, lines 17—40), for a given medium, however, the vehicle must be one which will not excessively swell or dissolve the surface layer. Those skilled in the art can determine suitable solvent candidates for a particular medium by reference to solubility parameters, or by empirical methods.

Classes of solvents which have been found suitable for use in the present invention include the monoglycol and polyglycol ethers. Representative members of this class include ethylene glycol monoalkyl ethers, diethylene glycol monoalkyl ethers, triethylene glycol monoalkyl ethers, propylene glycol monoalkyl ethers, dipropylene glycol monoalkyl ethers, tripropylene glycol monoalkyl ethers, butylene glycol monoalkyl ethers, and mixtures of the foregoing ethers. The preferred members of this class are the diethylene glycol monoalkyl ethers (e.g. "Carbitols", commercially available from Union Carbide Corporation) and mixtures of these with ethylene glycol monoalkyl ethers (e.g. "Cellosolves", commercially available from Union Carbide Corporation). The alkyl portion of the monoethylene and diethylene glycol monoalkyl ethers can have from 1 to 6 carbon atoms. The preferred ethylene and diethylene glycol monoalkyl ethers have from 2 to 4 carbon atoms in the alkyl portion. Although ethylene glycol monomethyl ether tends to penetrate and dry too rapidly when used alone, and although diethylene glycol monohexyl ether dries too slowly to provide acceptably short drying times with some media, both are quite useful when blended with other monoglycol and diglycol ethers.

Although diethylene glycol monoalkyl ethers can be used alone as the vehicle, the use of ethylene glycol monoalkyl ethers alone is not feasible because of the short open-cap life obtained as well as the excessively fast penetration of the liquid-sorbent film by the solvent, which produces rapid drying with poor imaging characteristics. If the vehicle penetrates and dries too fast, imaging will be poor due to lack of opportunity for the vehicle to diffuse and flow a sufficient amount before drying. Dots occur where the pen pauses and it is difficult to obtain homogeneous filled areas of uniform appearance.

Thus, diethylene glycol monoalkyl ethers, which are slower drying than monoethylene glycol monoalkyl ethers, and blends of diethylene glycol monoalkyl ethers with monoethylene glycol monoalkyl ethers can be used to adjust the drying time to be in the preferred range of 20 to 60 seconds.

Besides blends of the diethylene glycol monoalkyl ethers and ethylene glycol monoalkyl ethers, other high boiling, non-polar solvents can be used to adjust the drying time. Monohydric alcohols having, for example, from 1 to 10 carbon atoms, can be used to advantage in this regard. 1-Hexanol has been found to be particularly effective for adjusting the drying time.

Other consideration in formulating ink vehicles will be apparent when considering ink viscosity and ink climb rate as discussed hereinafter.

Although inks meeting a preferred set of specifications, as set forth hereinafter, can theoretically be formulated using only the dyes and solvents discussed above, in practice it has been found necessary to tailor the inks more carefully to the imaging medium to obtain optimum performance with various dye/solvent combinations. For example, it has been found useful to add resin levelling agents to the ink vehicles to help form a smooth, glossy (versus flat) coating which is light reflective, serve as a binder for the dye to the film, and serve as a dispersing agent for the dye in the solvent. The resin is preferably soluble in the solvents of the vehicle. Levelling agents are well known in the printing ink art. Types of resins useful in the present invention include esterified rosins, epoxy resins, novolak resins, and styrene allyl copolymers. Specific examples are Sylvatac 140®, an esterified rosin (Sylvachem Corporation); Pentalyn K, a fumaric acid adduct of rosin esterified with pentaerythritol (Hercules Incorporated); Dymerex, a dimerized rosin (Hercules Incorporated); Alnovol PN 320, a phenolic novolak (American Hoechst Corp.); Monsanto RJ 1010, a styrene-allyl copolymer (Monsanto Company). These resins are generally included in amounts ranging up to 10% by weight, preferably 2 to 10% by weight, based on the total ink formulation.

Wetting agents are useful both as a processing aid in formulating the ink as well as an image enhancing additive. The addition of a small amount of wetting agent assists in dispersing and solubilizing the dye in the solvent. The wetting agent also improves the wettability of the ink on the film so that a pinhole-free image is formed. The wetting agent is preferably soluble in the solvents of the vehicle. Representative wetting agents are well known in the art and can be selected from the silicones, fluorocarbons, polyalkylene oxides, and the like. An alkylene oxide modified dimethyl polysiloxane (Silwet™ L-7607, Union Carbide Corporation) has been found to be particularly useful.

Generally the amount of wetting agent used will range from about 0.01% by weight to about 3% by weight, based on the total ink formulation. The maximum amount is based on practical limits. If too much is used the liquid may be come "scummy" and beyond the critical micelle concentration, the surface tension may actually increase. Generally a surface tension in the range of 20 to $35 \times 10^{-5}$ N/cm is preferred.

While wetting agent and resin are not required in all ink formulations, they can be included to compensate for variation in dye purity, which might cause wetting or levelling problems. Omission of resin from some link compositions tend to cause feathering, while omission of wetting agent may result in formation of pinholes. Although some dyes, e.g. blue and green phthalocyanine dyes, give smooth, uniform images without resin and wetting agent, these materials are included as a safeguard against variations in dye purity which could degrade the appearance of solid fill-in areas.

The addition of antistatic agents such as the silicone wetting agent, can also reduce static problems. It has been found that the addition of 0.1 to 0.5% by weight of an antistat such as polydimethyl siloxane is useful for reducing static effects.

The amount of vehicle utilized in the ink compositions of this invention depends upon the particular solubility of the resin and the dye utilized. It is necessary to use a sufficient amount of vehicle so that both the resin and the dye are soluble therein. When formamide is incorporated into the ink composition, it is considered to be a portion of the vehicle component.

The amount of water-insoluble dye utilized in the ink compositions of this invention depends upon, among other factors, color intensity and solubility in the solvents being utilized. The optimum amount of dye is that amount which will give the ink solution a sufficient color strength to produce a satisfactory optical density. Generally, it is desirable to obtain an optical density of 0.8 to 2 optical density units on the transparent media. For opaque media the optical density may be about 1/2 that for transparent media and still provide useful results. This amount can be determined by those skilled in the art.

Inks of the present invention can be prepared by mixing, milling and filtering techniques well known in the art. In a typical case an air stirrer can be used to mix the solvent and the dye. The wetting agent can be added to the solvent prior to adding the dye to assist in dispersing and dissolving the dye. The solution is stirred until the dye is uniformly mixed. It may be useful with certain dye/solvent combinations to then further mix the ingredients in a bead mill for one-half hour or so to reduce agglomeration. The resin levelling agent is then added and the mixture further bead milled.

The resulting mixture is then filtered through paper (e.g. Whatman No. 1 filter paper) to remove particles which could plug the pen nib. The inks are then loaded into pens which have various types of delivery mechanism such as a hollow central delivery tube of about 0.7 to 1 mm diameter or a polyester fiber nib.

A number of performance ceiteria can be utilized to characterize the inks of the present invention. Dye solubility, lightfastness, permanence (adhesion), surface tension, ink climb rate, viscosity, open-cap life, and drying time are meaningful parameters. A description of the measurement and significance of such parameters follows.

Dye solubility

The solubility of various dyes in the preferred ink vehicles can be readily determined by reference to the literature and various simple tests. The very soluble dyes are selected for use in formulations at a concentration of 15—25% solids. If the dye precipitates from the ink vehicle after several weeks of storage, tests are run to determine percentage of solids remaining. Optical density of plotted images (solid fill in) is often higher for more dilute inks than for more viscous concentrated solutions as the latter have slower ink climb rates in pen nibs. Preferred dye concentrations for inks described herein are between 15 and 18% solids.

Lightfastness

The inks (A) of the present invention maintain their optical properties on exposure to heat and light. One test to determine their lightfastness is to place inked liquid-sorbent transparencies on the stage of a 3 M Model 66 overhead projector for 6 hours and measure the optical density at hourly intervals. Acceptable dyes have a change in optical density of no more than 10% for the 6 hour period as measured with MacBeth Model TD 504 densitometer using a filter to obtain maximum reading.

Permanence (adhesion)

The inks should adhere well to the substrates to which they are applied. A simple test involves allowing the applied ink to dry at room temperature until dry to the touch and then wiping the ink with a wet cotton swab with normal hand pressure. A satisfactory ink will exhibit little or no removal or smearing when subjected to this test.

Surface tension

The inks should have a surface tension of between about 20 and $35 \times 10^{-5}$N/cm to be suitable for plotting at a speed of about 10 cm/sec with a fiber nib-tipped pen. To measure surface tension, a Fisher Model 21 Tensiomat is employed to measure force required to pull a platinum-iridium ring having a circumference of 6 cm from the solvent surface at constant speed. The instrument is calibrated with deionized water at $72.4 \times 10^{-5}$N/cm, 20°C. Tests are run in triplicate and the average taken.

Ink climb rate

Pen delivery systems vary considerably with each manufacturer and, because the pen is an integral part of the system and can affect the performance of inks of the present invention, it is necessary to determine the ink climb rate for each pen delivery system. For example, to do this for pens having fiber nibs, the nibs are supported vertically with the base immersed in 0.3 mm ink. A stop watch is activated at the instant of immersion and halted as soon as the tip is visibly saturated with ink. The rate is calculated by dividing elapsed time by nib length in centimeters. It has been found that the climb rate should not exceed about 35 sec/cm for best performance with averaged speed (10 cm/sec) plotters. Generally a climb rate in the range of about 10 to 25 sec/cm provides satisfactory results delivering about 24 mg of ink per 10 meters of line length (0.64 mm width). Ink viscosities of about 10 to 20 mPas will generally provide acceptable climb rates.

Viscosity

As noted above, an ink viscosity in the range of about 5 to 20 mPas is satisfactory. Viscosities of such liquids can be measured by known techniques, such as by using a Brookfield LVF viscometer with a No. 1 spindle at 60 rpm. The glycol ether solvents used in the vehicles of this invention generally have viscosities in the range of about 1 to 5 mPas, the accurate measurement of which requires use of a UL adapter.

Open-cap life

A primary characteristic of the inks of the present invention is a long open-cap life. An open-cap life of at least 1 hour and preferably 2 hours or more is required at room temperature and 50% relative humidity. The open cap life can be measured by leaving the pens uncapped, lying horizontally for varying periods of time at 20°C, 50% R.H. At predetermined intervals, the pens are inserted in a plotter and a straight line is drawn on the liquid-sorbent medium at a speed of 10 cm/sec. The pen should draw a dense, colored line from beginning to end. As the pen nibs dry out they fail to generate a dense line during at least the initial portion of the line. Pens containing the inks of the present invention can go uncapped for at least 1 hour and many can go uncapped for 2 hours or more before exhibiting this "skipping" tendency. Open-cap life as well as dry time will vary with temperature and humidity conditions.

Drying time

Drying times of under 2 minutes are required and are preferably 20 seconds to 60 seconds. Good imaging properties are retained. The drying time test involves making a series of lines on a liquid sorbent film every five seconds. A series of 12 to 15 lines will thus cover a time span up to 75 seconds. A cotton swab is then immediately rubbed across the lines using normal hand pressure. Smearing of the wet lines will indicate the time required for the ink to dry. That is, if the last 5 of the 15 lines smear, the drying time is about 25 seconds.

The specification for a preferred ink composition according to the teachings herein can be shown in the following table.

TABLE I

| Parameter | Value or description |
|---|---|
| Viscosity[a] | 8—15 mPas |
| Surface tension[b] | $20-35 \times 10^{-5}$ N/cm |
| Ink climb rate | 15—35 sec/cm |
| Drying time | 20—60 sec |
| Open-cap life | 1—2 hrs or longer |
| Lightfastness | 0—6% decrease in optical density after 6 hrs on projector stage (5—10% decrease in optical density for black dyes) |
| Permanence | Not removed by moisture or handling |
| Edge acuity | No feathering |
| Wetting out | No pinholes or streaks |
| Film-ink interaction | None |
| Surface disruption | None (solvent must not attack film) |
| Optical density | 1—2 |
| Solid fill-in | Uniform striation permissible; no bleeding into adjacent color areas; no smearing on overwriting |
| Lettering | Minimal end dotting |
| Toxicity | None |
| Dye solids | 10—20% by weight |

[a]Viscosity of vehicle alone should be 1—5 mPas.
[b]Surface tension of vehicle alone should be $20-30 \times 10^{-5}$ N/cm.

The liquid-sorbent media useful in combination with the inks of the present invention are particularly those described in U.S. Patent 4,379,804. These are composite, liquid-sorbent media applied to various substrates, e.g., paper or transparent polymeric substrates, to provide improved liquid-sorbent materials. The composite media comprise a liquid-sorbent underlayer and overlying said underlayer, a liquid permeable surface layer wherein the liquid sorptivity of the underlayer is greater than the liquid sorptivity of the surface layer. These media are particularly useful when applied to transparent, polyester substrates for use as overhead transparencies.

The surface layer of the liquid-sorbent media is chosen to be permeable to the inks used to image the substrates, but to resist swelling and gouging by the ink and the pen applying the ink. These composite liquid-sorbent media are particularly useful for automatic pen plotting devices.

Other details of media useful in this invention are disclosed in U.S. Patent 4,379,804.

The following, non-limiting examples are intended to further illustrate the present invention.

Examples 1—8

The following ingredients, in the amounts indicated in Table II, were combined to form various ink compositions by the following procedure.

An air stirrer was utilized to mix the vehicle components with the dye. Wetting agent was added to the vehicle components prior to the addition of the dye, to disperse the dye. The mixture was stirred until the dye was uniformly dispersed. Then the resin levelling agent was added to the mixture, and the resulting mixture was stirred until homogeneous. After a period of about 1/2 hour, the mixture was poured through a fluted filter to remove any undissolved dye solids. The resulting mixture was stirred with an air driven mixture until it was homogeneous.

TABLE II
Ink composition
(parts by weight)

| | 1 | 2 | 3 | 4 | 5 | 6 | 7 | 8 |
|---|---|---|---|---|---|---|---|---|
| Acetosol blue GLS[1] | | | | 1 | | | | |
| Acetosol fire red 3GL[1] | 2 | 2 | 1 | | | | | |
| Acetosol green GLS[1] | | | | | 2 | 2 | | |
| Basonyl blue 636[2] | | | 1 | 1 | | | | |
| Flexo-black X-11[2] | | | | | | | 2 | 2 |
| diethylene glycol monoethyl ether[3] | | 10 | | 10 | | | | |
| diethylene glycol monobutyl ether[4] | 1.67 | | 1.67 | | 1.67 | 4.5 | 1.67 | 3.5 |
| ethylene glycol monoethyl ether[5] | 3.33 | | 3.33 | | 3.33 | 5.5 | 3.33 | 6.5 |
| n-hexanol | 3 | | 3 | | 3 | | 3 | |
| formamide | 2 | | 2 | | 2 | | 2 | |
| esterified rosin[6] | 0.6 | 0.6 | 0.6 | 0.6 | 0.6 | 0.6 | 0.6 | 0.6 |
| polydimethylsiloxane[7] | 0.06 | 0.06 | 0.06 | 0.06 | 0.06 | 0.06 | 0.06 | 0.06 |

[1]Commercially available form Sandoz, Inc.
[2]Commercially available from BASF Wyandotte Corp.
[3]Ethyl Carbitol®, commercially available from Union Carbide Corporation
[4]Butyl Carbitol®, commercially available from Union Carbide Corporation
[5]Ethyl Cellosolve®, commercially available from Union Carbide Corporation
[6]Sylvatac 140, commercially available from Sylvachem Corporation
[7]Silwet™ L-7607, commercially available from Union Carbide Corporation

The foregoing inks exhibited the following characteristics:

TABLE III

| | 1 | 2 | 3 | 4 | 5 | 6 | 7 | 8 |
|---|---|---|---|---|---|---|---|---|
| Drying time (sec) Liquid-sorbent film[a] | 25 | 30 | 20 | 45 | 10 | 30 | 40 | 75 |
| Gelatin-coated polyester | 1080 | — | 2160 | — | 2100 | — | 2940 | — |
| Uncoated polyester | 1980 | — | 2640 | — | 2520 | — | 3600 | — |
| Viscosity (mPas) | 13.3 | 13 | 14.3 | 17.8 | 12.8 | 9.1 | 13.7 | 8.9 |
| Open-cap life (hrs) | 2 | >4 | 1 | >4 | 1 | >4 | >5 | >4 |
| Ink climb rate (sec/cm) (polyester fiber nib) | 20.4 | — | 24.9 | — | 26.9 | 17.9 | 25.1 | 16.8 |
| Surface tension ($10^{-5}$N/cm) | 34 | 33.9 | 34 | 33.8 | 34 | 30.9 | 34 | 31.1 |
| Optical density | 1.24 | — | 1.55 | — | 1.05 | 0.93 | 1.84 | 1.26 |

[a]Liquid-sorbent film was prepared in accordance with Example 1 of U.S. Patent No. 4,379,804.

# EP 0 148 615 B1

The ink compositions of Examples 1—8 have drying times on liquid-sorbent film of less than or equal to 75 seconds and drying times on conventional polyester substrates in excess of 1080 seconds. Furthermore, the ink compositions of Examples 1—7 have drying times on the patented liquid-sorbent film of less than or equal to 45 seconds. The ink compositions of Examples 1—8 have open-cap lives of at least 1 hour and the ink compositions of Examples 2, 4, and 6—8 have open-cap lives that exceed 4 hours.

Various modifications and alterations of this invention will become apparent to those skilled in the art without departing from the scope of this invention, and it should be understood that this invention is not to be unduly limited to the illustrative embodiments set forth herein.

## Claims

1. An ink composition that is capable of use in marking pens and that is compatible with transparent, ink-receptive, liquid-sorbent media which comprise a liquid-sorbent underlayer and, overlying said underlayer, a liquid-permeable surface layer, the liquid sorptivity of said underlayer being greater than the liquid sorptivity of said surface layer, said ink comprising:

(a) from 15 to 25% by weight, based on the total ink composition, of one or more non-ionic, water insoluble dyes that adhere well to the surface of said media, said dye or dyes being capable of providing an optical density on said media which decreases by no more than 10% after 6 hours exposure to heat and light on the stage of an overhead projector.

(b) up to 85% by weight, based on the total ink composition, of a vehicle having a boiling temperature, at atmospheric pressure, of at least 150°C, said vehicle comprising at least one solvent for said dye or dyes.

said ink composition having a surface tension of between 20 and $35\times10^{-5}$N/cm and a viscosity of between 5 and 20 mPas, whereby said ink composition has a drying time on said liquid-sorbent media of less than two minutes and an open-cap life of at least one hour.

2. The composition of claim 1 further including formamide.

3. The composition of claim 1 or claim 2 further including a resin levelling agent.

4. The composition of claim 3 wherein said resin levelling agent is selected from esterified resins, epoxy resins, novolak resins, and styrene-allyl copolymers.

5. The composition of claim 3 or claim 4 wherein said resin levelling agent is soluble in said vehicle.

6. A composition as claimed in any preceding claim further including a wetting agent.

7. The composition of claim 6 wherein said wetting agent is selected from silicones, fluorocarbons, and polyalkylene oxides.

8. A composition as claimed in claim 6 or claim 7 wherein said wetting agent is soluble in said vehicle.

9. A composition as claimed in any preceding claim wherein said dye or dyes is selected from basic triarylmethane dyes, azo dyes, metallized azo dyes, and phthalocyanine dyes.

10. A composition as claimed in any preceding claim wherein said solvent is selected from diglycol ethers, and mixtures of diglycol ethers and monoglycol ethers.

11. The composition of claim 10 wherein said solvent is selected from dialkylene glycol monoalkyl ethers and mixtures of said ethers with monoalkylene glycol monoalkyl ethers.

12. The composition of claim 11 wherein said vehicle is a mixture of a ethylene glycol monoalkyl ether and a diethylene glycol monoalkyl ether.

13. The composition of claim 12 wherein said solvent is a mixture of ethylene glycol monoethyl ether and diethylene glycol monobutyl ether.

14. A composition as claimed in each of claims 2, 3 and 6, comprising:

(a) up to 10% by weight of said resin levelling agent,

(b) up to 3% by weight of said wetting agent, and

(c) up to 20% by weight formamide, all percentages being based on the total ink composition.

15. An ink composition as claimed in any preceding claim wherein said dye or dyes are capable of providing an optical density on said media of between 0.8 and 2 optical density units.

16. An information recording kit for making transparencies for projection of information comprising a recording material, an ink composition as claimed in any preceding claim, and means for applying the ink composition on the recording material, wherein said recording material comprises a transparent substrate having applied thereto a composite media comprising a liquid-sorbent underlayer, and, overlying said underlayer, a liquid permeable surface layer wherein the liquid sorptivity of the underlayer is greater than the liquid sorptivity of the surface layer.

## Patentansprüche

1. Farbzusammensetzung, die für die Verwendung von Markierstufen geeignet und die mit einem durchsichtigen, farbannehmenden, flüssigkeitssorbierenden Medium verträglich ist, das einen flüssigkeitssorbierende Unterschicht und über der Unterschicht eine flüssigkeitsdurchlässige Oberflächenschicht besitzt, wobei das Flüssigkeitssorptionsvermögen der Unterschicht größer ist als das Flüssigkeitssorptionsvermögen der Oberflächenschicht und die genannte Farbe enthält:

(a) 15 bis 25 Gew.%, auf die Gesamtmenge der Farbzusammensetzung bezogen, eines oder mehrerer nichtionischer wasserunlöslicher Farbstoffe, die gut an der Oberfläche der genannten Medien haften, wobei der oder die Farbstoffe geeignet sind, auf den genannten Medien eine optische Dichte herzustellen, die unter der Einwirkung von Hitze und Licht auf der Bühne eines Arbeitsprojektors in sechs Stunden um nicht mehr als 10% abnimmt;

(b) bis zu 85 Gew.%, auf die Gesamtmenge der Farbzusammensetzung bezogen, eines Bindemittels, das unter atmosphärischem Druck einen Siedepunkt von mindestens 150°C hat und das mindestens ein Lösungsmittel für den Farbstoff oder die Farbstoffe enthält,

wobei die Farbzusammensetzung eine Oberflächenspannung von 20 bis $35 \times 10^{-5}$ N/cm und eine Viskosität von 5 bis 20 mPa hat, so daß die Farbzusammensetzung auf dem flüssigkeitssorbierenden Medium eine Trockenzeit von weniger als zwei Minuten hat und bei offener Kappe eine Tropfzeit von mindestens einer Stunde besitzt.

2. Zusammensetzung nach Anspruch 1, die außerdem Formamid enthält.

3. Zusammensetzung nach Anspruch 1 oder 2, die außerdem ein Harzverlaufmittel enthält.

4. Zusammensetzung nach Anspruch 3, dadurch gekennzeichnet, daß das Harzverlaufmittel aus den veresterten Harzen, Epoxidharzen, Novolakharzen und Styrol - Allyl - Copolymeren ausgewählt ist.

5. Zusammensetzung nach Anspruch 3 oder 4, dadurch gekennzeichnet, daß das Harzverlaufmittel in dem Bindemittel löslich ist.

6. Zusammensetzung nach einem der vorhergehenden Ansprüche, das außerdem ein Netzmittel enthält.

7. Zusammensetzung nach Anspruch 6, dadurch gekennzeichnet, daß das Netzmittel aus den Silikonen, Fluorkohlenstoffen und Polyalkylenoxiden ausgewählt ist.

8. Zusammensetzung nach Anspruch 6 oder 7, dadurch gekennzeichnet, daß das Netzmittel in dem Bindemittel löslich ist.

9. Zusammensetzung nach einem der vorhergehenden Ansprüche, dadurch gekennzeichnet, daß der oder die Farbstoffe aus den basischen Triarylmethanfarbstoffen, Azofarbstoffen, metallisierten Azofarbstoffen und Phthalocyanfarbstoffen ausgewählt ist.

10. Zusammensetzung nach einem der vorhergehenden Ansprüche, dadurch gekennzeichnet, daß das Lösungsmittel aus den Diglykolethern und den Gemischen von Diglykoläthern und Monoglykolethern ausgewählt ist.

11. Zusammensetzung nach Anspruch 10, dadurch gekennzeichnet, daß das Lösungsmittel aus den Dialkylenglykolmonoalkylethern und den Gemischen dieser Ether mit Monoalkylenglykolmonoalkylethern ausgewählt ist.

12. Zusammensetzung nach Anspruch 11, dadurch gekennzeichnet, daß das Bindemittel ein Gemisch aus einem Ethylenglykolmonoalkylether und einem Diethylenglykolmonoalkylether ist.

13. Zusammensetzung nach Anspruch 11, dadurch gekennzeichnet, daß das Lösungsmittel ein Gemisch aus einem Ethylenglykolmonoethylether und einem Diethylenglykolmonobutylether ist.

14. Zusammensetzung nach jedem der Ansprüche 2, 3 und 6 mit

(a) bis zu 10 Gew.% des Harzverlaufmittels,

(b) bis zu 3 Gew.% des Netzmittels und

(c) bis zu 20 Gew.% Formamid, wobei alle Prozentsätze auf die Gesamtmenge der Farbzusammensetzung bezogen sind.

15. Farbzusammensetzung nach einem der vorhergehenden Ansprüche, in der der oder die Farbstoffe geeignet sind, auf dem Medium eine optische Dichte von 0,8 bis 2 optischen Dichteinheiten herzustellen.

16. Informationsaufzeichnungssatz zum Herstellen von Diapositiven für die Projektion von Information mit einem Aufzeichnungsträger, einer Farbzusammensetzung nach einem der vorhergehenden Ansprüche und Mitteln zum Auftragen der Farbzusammensetzung auf dem Aufzeichnungsträger, wobei der Aufzeichnungsträger ein durchsichtiges Substrat umfaßt, auf dem ein Verbundmedium aufgetragen ist, das eine flüssigkeitssorbierende Unterschicht und über der Unterschicht eine flüssigkeitsdurchlässige Oberflächenschicht besitzt, wobei das Flüssigkeitssorptionsvermögen der Unterschicht größer ist als das Flüssigkeitssorptionsvermögen der Oberflächenschicht.

## Revendications

1. Composition d'encre, pouvant être utilisée dans des crayons marqueurs, et qui est compatible avec des supports transparents, réceptifs à l'encre, sorbant les liquides, constitués d'une sous-souche sorbant les liquides et, au-dessus de cette sous-couche, une couche superficielle perméable aux liquides, la sorptivité via-à-vis des liquides de ladite sous-souche étant supérieure à la sorptivité vis-à-vis des liquides de ladite couche superficielle, ladite encre comprenant:

(a) de 15 à 25% en poids, par rapport à la composition d'encre totale, d'un ou plusieurs colorants non-ioniques insolubles dans l'eau, qui adhère(nt) bien à la surface desdits supports, ledit ou lesdits colorants étant capable(s) de créer une densité optique, sur lesdits supports, qui diminue d'au plus 10% après 6 heures d'exposition à la chaleur et à la lumière sur la platine d'un rétroprojecteur,

(b) jusqu'à 85% en poids, par rapport à la composition d'encre totale, d'un véhicule ayant, à la pression atmosphérique, une température d'ébullition d'au moins 150°C, ledit véhicule comprenant au moins un solvant pour ledit ou lesdits colorants,

ladite composition d'encre ayant une tension superficielle comprise entre 20 et $35.10^{-5}$ N/cm et une viscosité comprise entre 5 et 20 mPa · s, ladite composition d'encre ayant un temps de séchage, sur lesdits supports sorbant les liquides, inférieure à deux minutes, ainsi qu'une durée de vie, en flacon ouvert, d'au moins une heure.

2. Composition selon la revendication 1, comprenant en outre du formamide.

3. Composition selon la revendication 1 ou la revendication 2, comprenant en outre un agent d'étalement du type résine.

4. Composition selon la revendication 3, dans laquelle ledit agent d'étalement du type résine est choisi parmi les résines estérifiées, les résines époxydes, les résine novolaques et les copolymères styrène-allyle.

5. Composition selon la revendication 3 ou la revendication 4, dans laquelle ledit agent d'étalement du type résine est soluble dans ledit véhicule.

6. Composition selon l'une quelconque des revendications précédentes, comprenant en outre un agent mouillant.

7. Composition selon la revendication 6, dans laquelle ledit agent mouillant est choisi parmi les silicones, les fluorocarbones et les poly(oxydes d'alkylène).

8. Composition selon la revendication 6 ou la revendication 7, dans laquelle ledit agent mouillant est souble dans ledit véhicule.

9. Composition selon l'une quelconque des revendications précédentes, dans laquelle ledit ou lesdits colorants sont choisi(s) parmi les colorants triarylméthanes basiques, les colorants azoïques, les colorants azoïques métallisés et les colorants phtalocyanines.

10. Composition selon l'une quelconque des revendications précédentes, dans laquelle ledit solvant est choisi parmi les diglycoléthers et les mélanges de diglycoléthers et de monoglycoléthers.

11. Composition selon la revendication 10, dans laquelle ledit solvant est choisi parmi les éthers monoalkyliques de dialkylèneglycol et les mélanges desdits éthers avec des éthers monoalkyliques de monoalkylèneglycol.

12. Composition selon la revendication 11, dans laquelle ledit véhicule est un mélange d'éther monoalkylique d'éthylèneglycol et d'éther monoalkylique de diéthylèneglycol.

13. Composition selon la revendication 12, dans laquelle ledit solvant est un mélange d'éther monoéthylique d'éthylèneglycol et d'éther monobutylique de diéthylèneglycol.

14. Composition selon l'une quelconque des revendications 2, 3 et 6, comprenant
(a) jusqu'à 10% en poids dudit agent d'étalement du type résine,
(b) jusqu'à 3% en poids dudit agent mouillant, et
(c) jusqu'à 20% en poids de formamide,
tous les pourcentages étant exprimés par rapport à la composition d'encre totale.

15. Composition d'encre selon l'une quelconque des revendications précédentes, dans laquelle ledit ou lesdits colorants est (sont) capable(s) de créer une densité optique, sur lesdits supports, comprise entre 0,8 et 2 unités de densité optique.

16. Coffret d'enregistrement des informations, permettant de réaliser des transparents pour projection d'informations, comprenant un matériau d'enregistrement, une composition d'encre selon l'une quelconque des revendications précédentes, et un moyen pour appliquer la composition d'encre sur le matériau d'enregistrement, dans lequel ledit matériau d'enregistrement comprend un substrat transparent, sur lequel est appliqué un support composite comprenant une sous-couche sorbant les liquides et, au-dessus de cette sous-couche, une couche superficielle perméable aux liquides, la sorptivité vis-à-vis des liquides de la couche inférieure étant supérieure à la sorptivité vis-à-vis des liquides de la couche superficielle.